# EUROPÄISCHE PATENTANMELDUNG

(11) **EP 4 458 609 A1**
(43) Veröffentlichungstag der Anmeldung: **06.11.2024**
(21) Anmeldenummer: 24162622.5
(22) Anmeldetag: 11.03.2024
(51) Int. Cl.: B60M 1/16, B60M 1/24

(54) **TRAGSEILKLEMME UND OBERLEITUNGSANLAGE MIT TRAGSEILKLEMME**

(30) Priorität: 04.05.2023 DE 102023204122
(71) Anmelder: Siemens Mobility GmbH, 81739 München (DE)
(72) Erfinder: Terfloth, Sebastian, 91077 Dormitz (DE)
(74) Vertreter: Siemens Patent Attorneys

(57) **Zusammenfassung**

Die Erfindung betrifft eine Tragseilklemme zur Verbindung mit einem Auslegerrohr einer Oberleitungsanlage mit wenigstens einem Isolator mit wenigstens einer Befestigungsvorrichtung zur Befestigung der Tragseilklemme mit dem Auslegerrohr, wobei die wenigstens eine Befestigungsvorrichtung zur seitlichen Befestigung der Tragseilklemme mit dem Auslegerrohr und der wenigstens eine Isolator als Silikon-Verbundisolator ausgebildet ist, sowie eine Oberleitungsanlage mit wenigstens einer solchen Tragseilklemme.

## Beschreibung

Bei schienengebundenen und nicht schienengebundene Fahrleitungssysteme, beispielsweise eHighway-Fahrleitungssysteme, insbesondere für E-LKW's, ist eine wichtige Eigenschaft, neben weiteren Systemspezifika, die Einstellbarkeit von Tragseilhöhen- und -seitenlage. Zur Realisierung wird üblicherweise eine Bauweise gewählt, bei der die beiden Kettenwerke der zweipoligen Fahrleitung auf jeweils einem Ausleger an einer Hängesäule aufgehängt sind. Beide Tragseile sind mittels je einer isolierten Tragseilklemme verschiebbar auf jeweils einem Auslegerrohr befestigt, wobei beide Auslegerrohre an der Hängesäule befestigt sind. Die seitliche Einstellbarkeit wird dabei dadurch erreicht, dass die Tragseilklemmen auf dem jeweiligen Auslegerrohr horizontal um ca. +/- 10 cm verschoben werden können. Dies ist aus Gründen der Montage- und Betriebstoleranzen des Fahrleitungssystems auch weiterhin zwingend nötig. Eine bisher üblicherweise verwendete Tragseilklemme ist mit einem Gießharz-Isolator ausgestattet, sodass neben der mechanischen Führung des Tragseils bzw. der Tragseile auch die elektrische Isolation der Betriebsspannung zur geerdeten Hängesäule sichergestellt ist.

Für eHighway-Fahrleitungssysteme, insbesondere für E-LKW's hat sich in Feldversuchen, beispielsweise auf Autobahnen, gezeigt, dass wegen Streusalz-Einsatz, insbesondere in den Wintermonaten, die Kriechstrecke der gegenwärtig in den Tragseilklemmen eingesetzten Isolatoren deutlich größer, bzw. länger sein muss, als aus der Schienenfahrzeugtechnik bekannt. Die hierfür benötigten und gegenwärtig empfohlenen Werte von > 300mm bei 670 V Nennspannung am Isolator werden durch die bisher üblicherweise eingesetzten, isolierten Tragseilklemmen, bei denen die Kriechstrecke unter 100mm liegt, nicht erreicht. Hinzu kommt, dass der Isolierkörper aus Gießharz besteht, welches bei Kriechströmen mechanisch anfällig ist und aufgrund der fehlenden Selbstreinigung der Oberfläche somit auch häufig von Kriechströmen betroffen ist. Um den benötigten Kriechweg von > 300mm bei 670 V Isolationsspannung zu gewährleisten ist deshalb seit dem Jahr 2022 für alle Isolatoren in eHighway-Systemen der Einsatz von Silikon-Verbundisolatoren vorgeschrieben.

Zur Realisierung des erforderlichen Kriechwegs von > 300 mm unter Verwendung eines, aus einem Silikon-Verbundisolator bestehenden Isolierkörpers der Tragseilklemme ist ein deutlich größerer bzw. längerer Isolierkörper nötig, sodass sich die Baulänge der Tragseilklemme signifikant erhöht. Die Verwendung von solchen Tragseilklemmen mit deutlich vergrößerter Baulänge in bisheriger, üblicher Bauweise, bei der die Tragseilklemmen senkrecht auf bzw. über den Auslegerrohren angeordnet und von oben mit ihnen verbunden bzw. befestigt werden, würde die Geometrie und die mechanische Auslegung des verbundenen Auslegers signifikant beeinflussen und hätte insbesondere eine Erhöhung des Biegemoments zur Folge, welches vom Auslegerrohr getragen werden können muss, wodurch eine deutlich stabilere und somit entsprechend aufwändigere Konstruktion des Auslegers zur Aufnahme der Biegebelastung erforderlich wäre.

Anstelle davon wird deshalb eine alternative Bauweise verwendet, bei der Isolator und Tragseilklemme getrennt sind. Dabei werden die benötigten Isolatoren in die Tragseile eingeschnitten, sodass die Tragseilklemmen selbst keine isolierende Funktion sicherstellen müssen. Diese Bauweise ist allerdings technisch sehr aufwändig und hat insbesondere die Nachteile, dass jeweils zwei Isolatoren anstelle eines einzelnen Isolators benötigt werden und für die elektrische Durchverbindung zusätzlich eine Strombrücke erforderlich ist, wodurch ein wesentlich größerer Materialeinsatz und eine deutlich aufwändigere Montage erforderlich ist.

Der Erfindung liegt die Aufgabe zugrunde, eine verbesserte Tragseilklemme sowie eine Oberleitungsanlage mit wenigstens einer solchen Tragseilklemme anzugeben, die wesentlich einfacher zu errichten ist.

Gelöst werden die Aufgaben durch die Merkmale des unabhängigen Patentanspruchs 1 sowie des nebengeordneten Patentanspruchs 15. Weiterbildungen und Ausgestaltungen der Erfindung finden sich in den Merkmalen der abhängigen Patentansprüche wieder.

Dazu weist die erfindungsgemäße Tragseilklemme zur Verbindung mit einem Auslegerrohr einer Oberleitungsanlage wenigstens einen Isolator mit wenigstens einer Befestigungsvorrichtung zur Befestigung der Tragseilklemme mit dem Auslegerrohr auf, wobei die wenigstens eine Befestigungsvorrichtung zur seitlichen Befestigung der Tragseilklemme mit dem Auslegerrohr ausgebildet ist.

Die erfindungsgemäße Lösung hat den Vorteil, dass eine solche Tragseilklemme seitlich zum Auslegerrohr angebracht und auf diese Weise mit diesem verbunden, bzw. an diesem befestigt werden kann. Dadurch kann eine Tragseilklemme in senkrechter Richtung länger sein als bei Befestigung einer Tragseilklemme in üblicher Weise von oben mit dem Auslegerrohr. Somit kann die Bauhöhe einer erfindungsgemäßen Tragseilklemme mindestens um den Durchmesser des Auslegerrohrs vergrößert werden, ohne die Geometrie und die mechanische Auslegung des verbundenen Auslegers signifikant zu beeinflussen, da die Tragseilklemme nicht auf dem Auslegerrohr sitzt, sondern parallel zum Auslegerrohr seitlich angeordnet und dort mit dem Auslegerrohr verbunden ist.

Nach einer besonders bevorzugten Ausführungsform der Erfindung ist der wenigstens eine Isolator als Silikon-Verbundisolator ausgeführt, wobei der Isolator wenigstens aus einem GFK-Stab, einer oberen und einer unteren Armatur, einer Silikonhülle und der wenigstens einen Befestigungsvorrichtung besteht. Dabei ist die untere Armatur bevorzugt stabförmig mit kreisförmigem Querschnitt ausgeführt.

Der Isolator kann vorteilhaft als Silikon-Verbundisolator ausgeführt werden und besteht aus einem GFK (Glasfaserverstärkter Kunststoff) -Stab und darauf aufgepressten Metall-Armaturen oben und unten, beispielsweise aus Stahl, Aluminium, Edelstahl, etc. als Anschlussarmaturen. Durch die Verwendung eines Silikon-Verbundisolators als Isolator in der Tragseilklemme kann der Kriechweg entsprechend erhöht werden. Beispielsweise kann bei einer Isolationsspannung von 670 V ein Kriechweg von > 300 mm gewährleistet werden. Außerdem hat die Silikon-Hülle des Verbundisolators Selbstreinigungseigenschaften, die eine Verschmutzung verhindert, zumindest deutlich verringert. Da in der Regel die Vergrößerung der Baulänge einer Tragseilklemme mit Silikon-Verbundisolator zur Gewährleistung der längeren Kriechstrecke deutlich kleiner als der Durchmesser des jeweiligen Auslegerrohrs ist, ist die effektive Baulänge der Tragseilklemme mit Verbundisolator bei seitlicher Befestigung am Auslegerrohr kürzer als die Baulänge der Tragseilklemme mit Gießharz-Isolator bei üblicher Befestigung am Auslegerrohr von oben. Somit sind auch die mechanischen Belastungen, insbesondere Biegemomente und somit die Biegebelastung, entsprechend niedriger. Herstellungstechnisch ist die Stabform mit kreisförmigem Durchmesser vorteilhaft, da kostengünstig.

Nach einer weiteren bevorzugten Ausführungsform der Erfindung weist die wenigstens eine Befestigungsvorrichtung einen Topf mit einer Aufnahmeeinrichtung auf. Besonders bevorzugt ist die Aufnahmeeinrichtung zur Aufnahme der unteren Armatur ausgebildet. Die Befestigungsvorrichtung ist somit separat herstellbar und kann insbesondere auch separat, insbesondere ohne Tragseilklemme, am Auslegerrohr befestigt werden, wodurch die Montage vereinfacht wird. Des Weiteren ist dadurch vorteilhaft eine Aufnahmemöglichkeit insbesondere für eine Tragseilklemme mit Verbundisolator realisiert. Somit kann auf einfache Weise die untere Armatur in die Aufnahmeeinrichtung des Topfs der Befestigungsvorrichtung eingesteckt werden wodurch die Tragseilklemme als Ganzes mittels der unteren Armatur mit der Befestigungsvorrichtung verbunden ist. Die Tiefe der Aufnahmeeinrichtung richtet sich dabei danach, dass die untere Armatur und somit die gesamte Tragseilklemme mit Verbundisolator einen stabilen Halt in der Aufnahmeeinrichtung hat, damit eingeleitete Biegemomente sicher aufgenommen werden können. Bevorzugt, aber nicht darauf beschränkt, ist die Tiefe der Aufnahmeeinrichtung zumindest derart ausgebildet, bzw. dimensioniert, um die untere Armatur der Tragseilklemme zu einem bis zu zwei Drittel der Länge der unteren Armatur aufnehmen zu können.

Nach einer weiteren bevorzugten Ausführungsform der Erfindung weist die Aufnahmeeinrichtung einen kreisförmigen Querschnitt auf. Dabei entspricht besonders bevorzugt der Durchmesser des kreisförmigen Querschnitts der unteren Armatur dem Durchmesser des kreisförmigen Querschnitts der Aufnahmeeinrichtung. Auf diese Weise kann die untere Armatur der Tragseilklemme noch einfacher in die Aufnahmeeinrichtung der Befestigungsvorrichtung eingeführt, bzw. eingesteckt werden, wobei gleichzeitig die Stabilität der Position weiter erhöht wird, da der Zwischenraum zwischen unterer Armatur und Aufnahmeeinrichtung, also das Spiel, minimiert wird.

Nach einer weiteren besonders bevorzugten Ausführungsform der Erfindung ist die untere Armatur nach Aufnahme in der Aufnahmeeinrichtung des Topfs drehbar mit der Aufnahmeeinrichtung verbunden. Somit kann die untere Armatur und damit die gesamte Tragseilklemme mit Verbundisolator um die eigene Achse um 360 Grad und demzufolge entsprechend an jede gewünschte Position, beispielsweise zur Verbindung mit den Tragseilen, gedreht werden, wodurch die Montage deutlich vereinfacht wird. Durch das nicht vorhandene bzw. zumindest minimierte Spiel zwischen unterer Armatur und Aufnahmeeinrichtung bleibt dabei auch die erforderliche, sichere Aufnahme von eingeleiteten Biegemomenten gewährleistet.

Nach einer weiteren Ausführungsform der Erfindung ist der Topf mit der Aufnahmeeinrichtung mittels Befestigungsmittel zur seitlichen Befestigung am Auslegerrohr ausgebildet. Besonders bevorzugt sind die Befestigungsmittel Bügelschrauben. Dies ermöglicht eine einfache, schnelle und dauerhaft sichere, seitliche Befestigung einer Tragseilklemme mit Verbundisolator am betreffenden Auslegerrohr. Insbesondere durch die Verwendung von, beispielsweise zwei, Bügelschrauben kann die Befestigungsvorrichtung schnell und sicher seitlich am Auslegerrohr angeklemmt werden. Bei Bedarf lässt sich die Befestigung, beispielsweise zu Wartungszwecken, etc. ebenso leicht und schnell wieder lösen.

Nach einer weiteren bevorzugten Ausführungsform der Erfindung ist der Topf zur seitlichen Befestigung am Auslegerrohr im Kontaktbereich zum Auslegerrohr im Wesentlichen gemäß der äußeren Kontur des Auslegerrohrs ausgeformt. Damit wird der sichere Halt der Befestigungsvorrichtung am Auslegerrohr weiter verbessert.

Nach einer weiteren bevorzugten Ausführungsform der Erfindung weist die Oberfläche des Kontaktbereichs Unebenheiten auf. Besonders bevorzugt sind die Unebenheiten als Zähne oder Lamellen ausgebildet. Durch das Anformen der Unebenheiten, insbesondere Zähne oder Lamellen, auf der Oberfläche des Kontaktbereichs zwischen Befestigungsvorrichtung und Auslegerrohr wird der sichere Halt der Verbindung weiter optimiert.

Nach einer weiteren bevorzugten Ausführungsform der Erfindung ist die Tragseilklemme eine Tragseildrehklemme. Diese ist besonders einfach und kostengünstig verfügbar.

Ein weiterer Aspekt der vorliegenden Erfindung betrifft eine Oberleitungsanlage für nichtschienengebundene Fahrzeuge mit wenigstens einer Tragseilklemme nach einem der Ansprüche 1 bis 14.

Zusammengefasst ermöglicht die erfindungsgemäße Tragseilklemme mittels Verwendung eines Silikon-Verbundisolators die Realisierung eines deutlich längeren Kriechwegs und gewährleistet darüber hinaus sehr gute Selbstreinigungseigenschaften. Des Weiteren kann mit der erfindungsgemäßen Tragseilklemme die aufwändige, bisher übliche, alternativlose Bauweise mit ins Tragseil eingeschnittenen Isolatoren entfallen. Weiterhin ermöglicht die seitliche Befestigungsart der Tragseilklemme gegenüber üblichen Befestigungsarten von oben eine Verringerung der Bauhöhe, wodurch bei gegebener Seitenzugkraft auch die erforderliche Biege-Belastbarkeit von Tragseilklemme und Auslegerrohr sinkt.

Im Weiteren werden bevorzugte Ausführungsbeispiele der Erfindung mit Bezugnahme auf die Zeichnungen näher erläutert. Es zeigen:
- Fig. 1: eine Tragseilklemme des Standes der Technik,
- Fig. 2: eine Querschnittansicht einer erfindungsgemäßen Tragseilklemme, in seitlicher Befestigung an einem Auslegerrohr und
- Fig. 3: eine weitere Schnittansicht der erfindungsgemäßen Tragseilklemme aus Figur 2 von unten gesehen.

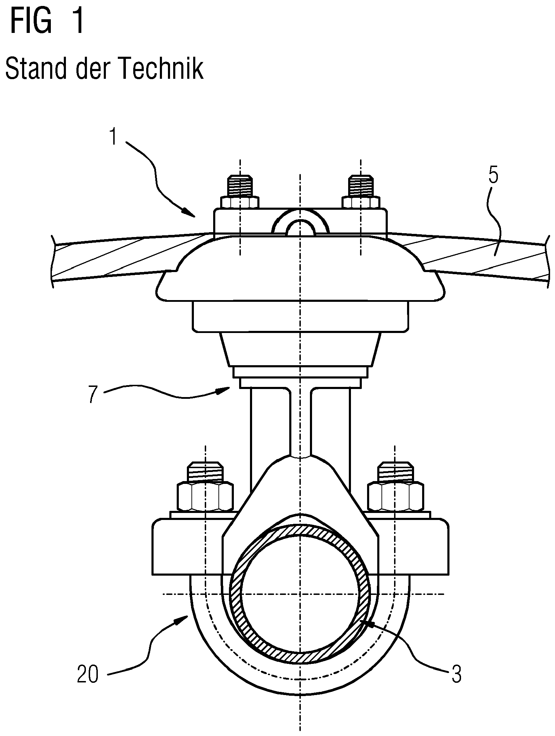

Figur 1 zeigt ein Tragseil 5 welches in üblicher Weise in eine Tragseilklemme 1 des Standes der Technik eingeklemmt ist. Die Tragseilklemme 1 ist ebenfalls in üblicher Weise mittels einer Befestigungsvorrichtung 20 von oben mittels Schraubverbindungen mit einem Auslegerrohr 3 verbunden, bzw. an diesem befestigt. Die Tragseilklemme 1 des Standes der Technik weist dabei einen üblichen Gießharz-Isolator 7 zur elektrischen Isolierung auf. Eine Eigenschaft eines Gießharz-Isolators 7 ist, dass die Anschlussteile, bzw. Anschlussarmaturen in den Isolierkörper eingegossen werden können. Dies ist bei einem Silikon-Verbundisolator 10 nicht möglich. Bei diesem müssen die Anschlussarmaturen oben 14 und unten 16 auf einen Isolierstab 12 aus GFK (Glasfaserverstärktem Kunststoff) aufgepresst werden, wodurch sich die Baulänge im Vergleich zum üblichen Gießharz-Isolator 7 vergrößert, weil die Längen der Anschlussarmaturen 14, 16 zur eigentlichen Isolationslänge hinzukommen. Zur Realisierung eines längeren Kriechwegs, insbesondere eines Kriechwegs von > 300mm bei 670 V Isolationsspannung, ist allerdings die Verwendung eines Silikon-Verbundisolators 10 zwingend erforderlich, da dies mit einem üblichen Gießharz-Isolator 7 nicht erzielt werden kann. Die Verwendung von Tragseilklemmen mit Silikon-Verbundisolatoren also mit deutlich vergrößerter Baulänge in bisheriger, üblicher Bauweise, bei der wie in Figur 1 gezeigt, die Tragseilklemme 1 senkrecht auf bzw. über dem Auslegerrohr 3 angeordnet und von oben mit diesem verbunden bzw. befestigt wird, würde die Geometrie und die mechanische Auslegung des mittels des Auslegerrohrs 3 verbundenen Auslegers signifikant beeinflussen und hätte insbesondere eine Erhöhung des Biegemoments zur Folge, welches vom Auslegerrohr 3 getragen werden können muss, wodurch eine deutlich stabilere und somit entsprechend aufwändigere Konstruktion des Auslegers zur Aufnahme der Biegebelastung erforderlich wäre, weshalb die Umsetzung dieser Lösung im Stand der Technik nicht in Betracht kommt.

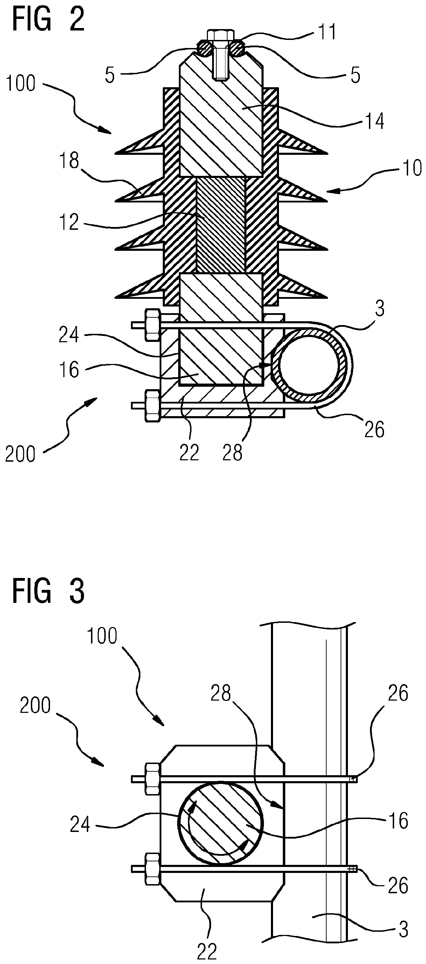

Figur 2 zeigt eine Querschnittansicht einer erfindungsgemäßen Tragseilklemme 100, in seitlicher Befestigung an einem Auslegerrohr 3. Die Tragseilklemme 100 weist dabei eine Befestigungsvorrichtung 200, einen Silikon-Verbundisolator 10, sowie einen Klemmdeckel 11 mit zugehöriger Schraube, die vorliegend zwei, hier parallel verlaufende Tragseile 5 einklemmt. Der Silikon-Verbundisolator 10 besteht aus einem GFK -Stab 12, der den Isolierkörper, bestehend aus einem glasfaserverstärktem Kunststoff (GFK), bildet, einer oberen 14 und einer unteren 16 Anschlussarmatur, und einer Silikonhülle 18, die den GFK-Stab 12 sowie teilweise die obere 14 und untere 16 Armatur einhüllt.

Dabei sind die Anschlussarmaturen 14, 16 jeweils oben bzw. unten auf den GFK-Stab 12 aufgepresst und bestehen vorzugsweise aus Metall, beispielsweise aus Stahl, Aluminium, Edelstahl, oder aus beliebigen anderen, geeigneten Materialien. Die Bohrung(en) für die Schraube(n) mit der bzw. mit denen mittels des Klemmdeckels 11 das bzw. die Tragseile 5 festgeklemmt werden, sind dabei in die obere Anschlussarmatur 14 eingebracht. Der GFK-Stab 12 kann deshalb erst hinter der Bohrung beginnen.

Durch die Verwendung des Silikon-Verbundisolators 10 kann der Kriechweg der Tragseilklemme 100 entsprechend erhöht werden. So kann insbesondere bei einer Isolationsspannung von 670 V ein Kriechweg von > 300 mm gewährleistet werden. Die Silikon-Hülle 18 des Verbundisolators 10 verhindert bzw. verringert darüber hinaus dauerhaft eine Verschmutzung der Oberfläche aufgrund deren Selbstreinigungseigenschaften.

Durch die Notwendigkeit des Aufpressens der Anschlussarmaturen 14, 16, da die Anschlussteile nicht in den Isolierkörper eingegossen werden können, erhöht sich im Vergleich zu einem üblichen Gießharz-Isolator 7 aus dem Stand der Technik, wie oben bereits ausgeführt, die Baulänge des Silikon-Verbundisolators 10, weil die Länge der Anschlussarmaturen 14, 16 zur eigentlichen Länge des Isolierkörpers, GFK-Stab 12, hinzukommen.

Durch die erfindungsgemäße seitliche Befestigung der Tragseilklemme 100 mittels der Befestigungsvorrichtung 200 kann die Bauhöhe der Tragseilklemme 100 mindestens um den Durchmesser des Auslegerrohrs 3 vergrößert werden, ohne die Geometrie und die mechanische Auslegung des verbundenen Auslegers signifikant zu beeinflussen, da die Tragseilklemme 100 nicht auf dem Auslegerrohr sitzt, sondern parallel zum Auslegerrohr 3 seitlich angeordnet und dort mit dem Auslegerrohr 3 verbunden ist.

Wie in Figur 2 dargestellt kann die Vergrößerung der Baulänge des Silikon-Verbundisolators 10 de facto aber zumindest kompensiert oder sogar überkompensiert werden. Da in der Regel die Vergrößerung der Baulänge einer Tragseilklemme mit Silikon-Verbundisolator zur Gewährleistung einer geforderten, längeren Kriechstrecke deutlich kleiner als der Durchmesser des jeweiligen Auslegerrohrs ist, ist die effektive Baulänge einer Tragseilklemme mit Verbundisolator bei seitlicher Befestigung am Auslegerrohr kürzer als die Baulänge einer Tragseilklemme mit Gießharz-Isolator bei üblicher Befestigung am Auslegerrohr von oben. Somit sind auch die mechanischen Belastungen, insbesondere Biegemomente und somit die Biegebelastung, entsprechend niedriger.

Die Befestigungsvorrichtung 200 besteht gemäß Figur 2 dabei aus einem Topf 22, der eine Aufnahmeeinrichtung 24 als Aussparung aufweist, die die untere Armatur 16 aufnehmen kann, bzw. in die die untere Armatur 16 und somit der Rest der Tragseilklemme 100, im Wesentlichen bestehend aus dem Isolator 10, eingesteckt werden kann. Der Topf 22 kann dann, mit oder ohne eingestecktem Isolator 10, mittels Befestigungsmittel 26, vorzugsweise Bügelschrauben, gemäß Darstellung in Figur 2 seitlich einfach und sicher mit dem Auslegerrohr 3 verbunden und an das Auslegerrohr 3 angeklemmt werden. In der Ausführungsform gemäß Figuren 2 und 3 genügen dabei zwei Bügelschrauben. Andere Befestigungsmittel und/oder eine davon abweichende Anzahl der Befestigungsmittel sind selbstverständlich ebenfalls möglich. Bei Bedarf lässt sich die Befestigung, beispielsweise zu Wartungszwecken, etc. ebenso leicht und schnell wieder lösen.

Die Tiefe der Aufnahmeeinrichtung 24 richtet sich dabei danach, dass die untere Armatur 16 und somit der Rest der Tragseilklemme 100 mit Verbundisolator 10 einen stabilen Halt in der Aufnahmeeinrichtung 24 hat, damit eingeleitete Biegemomente sicher aufgenommen werden können. Bevorzugt, aber nicht darauf beschränkt, ist die Tiefe der Aufnahmeeinrichtung 24 zumindest derart ausgebildet, bzw. dimensioniert, um die untere Armatur 16 der Tragseilklemme 100 zu einem bis zu zwei Drittel der Länge der unteren Armatur 16 aufnehmen zu können. Im vorliegenden Fall nimmt die Aufnahmeeinrichtung 24 etwa die untere Hälfte der unteren Armatur 16 auf.

Um einen möglichst sicheren und dauerhaften Halt der Befestigungsvorrichtung 200 am Auslegerrohr 3 und somit der Tragseilklemme insgesamt zu gewährleisten, ist der Kontaktbereich 28 der Befestigungsvorrichtung zum Auslegerrohr 3 gemäß der äußeren Kontur des Auslegerrohrs 3 ausgeformt. Um dies noch zu verbessern, sind an die Oberfläche des Kontaktbereichs 28 hier nicht dargestellte Unebenheiten in Form von Zähnen oder Lamellen angeformt.

Figur 3 zeigt eine weitere Schnittansicht der erfindungsgemäßen Tragseilklemme 100 aus Figur 2 von unten gesehen. Gleiche Bauteile werden dabei gleich bezeichnet. Dargestellt ist ebenfalls die seitliche Befestigung der Tragseilklemme 100 am Auslegerrohr 3 mittels der Befestigungsvorrichtung 200, wobei der Topf 22 mittels zweier Bügelschrauben 26 seitlich am Auslegerrohr 3 befestigt ist. Ebenfalls dargestellt ist der, gemäß der äußeren Kontur des Auslegerrohrs 3 ausgeformte Kontaktbereich 28 der Befestigungsvorrichtung 200 zum Auslegerrohr 3, um einen sicheren und stabilen Halt der Tragseildrehklemme 100 am Auslegerrohr 3 zu gewährleisten.

Des Weiteren ist in der Figur 3 der kreisrunde Querschnitt der stabförmigen unteren Armatur 16 des Silikon-Verbundisolator 10 dargestellt, die in der ebenfalls kreisrunden Aufnahmeeinrichtung 24 des Topfs 22 der Befestigungsvorrichtung 200 eingeführt ist. Der Durchmesser der unteren Armatur 16 und der Aufnahmeeinrichtung 24 sind dabei, wie ersichtlich, nahezu identisch, so dass sowohl die untere Armatur 16 der Tragseilklemme 100 noch einfacher in die Aufnahmeeinrichtung 24 der Befestigungsvorrichtung 200 eingeführt, bzw. eingesteckt werden kann, da der Zwischenraum zwischen unterer Armatur 16 und Aufnahmeeinrichtung 24, also das Spiel dazwischen, minimiert ist, als auch zusätzlich eine drehbare Verbindung entsteht, mittels derer die untere Armatur 16 und somit der gesamte Silikon-Verbundisolator 10 bzw. der Rest der Tragseilklemme 100 als Ganzes in der Aufnahmeeinrichtung 24 um 360 Grad um seine eigene Längs- bzw. Hochachse und somit an jede gewünschte Position, beispielsweise zur Verbindung mit den Tragseilen 5, gedreht werden kann. Dadurch wird die Montage deutlich vereinfacht. Darüber hinaus bleibt dabei durch das nicht vorhandene bzw. zumindest minimierte Spiel zwischen unterer Armatur 16 und Aufnahmeeinrichtung 24 auch die erforderliche, sichere Aufnahme von eingeleiteten Biegemomenten gewährleistet.

Selbstverständlich ist die erfindungsgemäße Lösung nicht auf die Ausführungsformen gemäß der Figuren 2 bis 3 beschränkt, sondern umfasst implizit ebenfalls alle weiteren, erfindungsgemäß möglichen Abweichungen der in den Figuren 2 bis 3 gezeigten Ausführungsformen, insbesondere, aber nicht ausschließlich bezüglich der Ausprägung bzw. Anordnung der Befestigungsvorrichtung 20.

*Unabhängig vom grammatikalischen Geschlecht eines bestimmten Begriffes sind Personen mit männlicher, weiblicher oder anderer Geschlechteridentität mit umfasst.*

## Patentansprüche

1. Tragseilklemme (100) zur Verbindung mit einem Auslegerrohr (3) einer Oberleitungsanlage, mit wenigstens einem Isolator (10) mit wenigstens einer Befestigungsvorrichtung (200) zur Befestigung der Tragseilklemme (100) mit dem Auslegerrohr (3),
**dadurch gekennzeichnet, dass**
die wenigstens eine Befestigungsvorrichtung (200) zur seitlichen Befestigung der Tragseilklemme (100) mit dem Auslegerrohr (3) ausgebildet ist.

2. Tragseilklemme (100) nach Anspruch 1,
**dadurch gekennzeichnet, dass**
der wenigstens eine Isolator (10) als Silikon-Verbundisolator, wenigstens bestehend aus einem GFK-Stab (12), einer oberen (14) und einer unteren (16) Armatur, einer Silikonhülle (18) und der wenigstens einen Befestigungsvorrichtung (200), ausgeführt ist.

3. Tragseilklemme (100) nach Anspruch 2,
**dadurch gekennzeichnet, dass**
die untere Armatur (16) stabförmig mit kreisförmigem Querschnitt ausgeführt ist.

4. Tragseilklemme (100) nach einem der vorherigen Ansprüche, **dadurch gekennzeichnet, dass**
die wenigstens eine Befestigungsvorrichtung (200) einen Topf (22) mit einer Aufnahmeeinrichtung (24) aufweist.

5. Tragseilklemme (100) nach Anspruch 4,
**dadurch gekennzeichnet, dass**
die Aufnahmeeinrichtung (24) zur Aufnahme der unteren Armatur (16) ausgebildet ist.

6. Tragseilklemme (100) nach Anspruch 4 oder 5,
**dadurch gekennzeichnet, dass**
die Aufnahmeeinrichtung (24) einen kreisförmigen Querschnitt aufweist.

7. Tragseilklemme (100) nach einem der vorherigen Ansprüche, **dadurch gekennzeichnet, dass**
der Durchmesser des kreisförmigen Querschnitts der unteren Armatur (16) dem Durchmesser des kreisförmigen Querschnitts der Aufnahmeeinrichtung (24) entspricht.

8. Tragseilklemme (100) nach einem der vorherigen Ansprüche, **dadurch gekennzeichnet, dass**
die untere Armatur (16) nach Aufnahme in der Aufnahmeeinrichtung (24) des Topfs (22) drehbar mit der Aufnahmeeinrichtung (24) verbunden ist.

9. Tragseilklemme (100) nach einem der vorherigen Ansprüche, **dadurch** g**ekennzeichnet**, **dass**
der Topf (22) mit der Aufnahmeeinrichtung (24) mittels Befestigungsmittel (26) zur seitlichen Befestigung am Auslegerrohr (3) ausgebildet ist.

10. Tragseilklemme (100) nach Anspruch 9,
**dadurch gekennzeichnet, dass**
die Befestigungsmittel (26) Bügelschrauben sind.

11. Tragseilklemme (100) nach einem der vorherigen Ansprüche, **dadurch gekennzeichnet, dass**
der Topf (22) zur seitlichen Befestigung am Auslegerrohr (3) im Kontaktbereich (28) zum Auslegerrohr (3) im Wesentlichen gemäß der äußeren Kontur des Auslegerrohrs (3) ausgeformt ist.

12. Tragseilklemme (100) nach einem der vorherigen Ansprüche, **dadurch gekennzeichnet, dass**
die Oberfläche des Kontaktbereichs (28) Unebenheiten aufweist.

13. Tragseilklemme (100) nach einem der vorherigen Ansprüche,
**dadurch gekennzeichnet, dass**
die Unebenheiten als Zähne oder Lamellen ausgebildet sind.

14. Tragseilklemme (100) nach einem der vorherigen Ansprüche,
**dadurch gekennzeichnet, dass**
die Tragseilklemme (100) als Tragseildrehklemme ausgeführt ist.

15. Oberleitungsanlage für nichtschienengebundene Fahrzeuge mit wenigstens einer Tragseilklemme (100) nach einem der Ansprüche 1 bis 14.
